# EUROPÄISCHE PATENTSCHRIFT

(11) **EP 2 507 172 B1**
(45) Veröffentlichungstag und Bekanntmachung des Hinweises auf die Patenterteilung: **08.04.2015**
(21) Anmeldenummer: 10792879.8
(22) Anmeldetag: 06.12.2010
(51) Int. Cl.: C01B 33/04, C08G 79/00, C08G 85/00, C01G 17/00, C23C 18/08, C23C 18/12

(54) **VERFAHREN ZUR HERSTELLUNG VON OLIGOSILANEN**
PROCESS FOR PREPARING A HYDROGENATED POLYGERMASILANE AND HYDROGENATED POLYGERMASILANE
PROCEDE DE PREPARATION D'UN POLYGERMASILANE HYDROGENE ET POLYGERMASILANE HYDROGENE

(30) Priorität: 04.12.2009 DE 102009056731
(43) Veröffentlichungstag der Anmeldung: 10.10.2012
(73) Patentinhaber: Spawnt Private S.à.r.l., 1148 Luxembourg (LU)
(72) Erfinder: AUNER, Norbert, 61479 Glashütten (DE); BAUCH, Christian, 06774 Muldenstein (DE); HOLL, Sven, 65558 Gückingen (DE); DELTSCHEW, Rumen, 04319 Leipzig (DE); MOHSSENI, Javad, 06766 Bitterfeld-Wolfen (DE); LIPPOLD, Gerd, 04179 Leipzig (DE); GEBEL, Thoralf, 01465 Dresden (DE)
(74) Vertreter: Epping - Hermann - Fischer
(86) Internationale Anmeldenummer: PCT/EP2010/068995
(87) Internationale Veröffentlichungsnummer: WO 2011/067418

(56) Entgegenhaltungen:
- WO-A1-2007/073196
- DE-A1- 3 506 071
- DE-C1- 4 239 246
- DE-C1- 4 313 130
- US-A- 4 632 816
- US-B1- 7 498 015

## Beschreibung

Diese Patentanmeldung beansprucht die Priorität der deutschen Patentanmeldung 10 2009 056 731.3, deren Offenbarungsgehalt hiermit durch Rückbezug aufgenommen wird.

Die Erfindung betrifft ein Verfahren zur Herstellung von Oligosilanen.

Üblicherweise werden Oligosilane durch die Hydrierung von halogenierten Siliciumverbindungen mit Metall- oder Halbmetallhydriden hergestellt. Verfahren, die auf hohe Reaktionstemperaturen angewiesen sind, beispielsweise die Hydrierung von halogenierten Siliciumverbindungen in Abwesenheit von Lösungsmitteln, sind dabei für die Darstellung von Oligosilanen nur wenig geeignet. Bei hohen Reaktionstemperaturen kann eine Zersetzung einer Siliciumverbindung beziehungsweise eines Oligosilans unter Abspaltung von beispielsweise einem Monosilan eintreten. Eine solche Abspaltung kann zum Beispiel durch eine reduktive Spaltung einer Si-Si-Bindung erfolgen. Verfahren, die auch unter niedrigen Reaktionstemperaturen hinreichend schnell ablaufen, benötigen gutlösliche komplexe Metallhydride. Diese komplexen Metallhydride, wie zum Beispiel Metall-Borhydride oder Metall-Aluminiumhydride, sind besser löslich als Alkali- oder Erdalkalimetallhydride, erhöhen jedoch deutlich die Produktionskosten.

Es sind daher Verfahren zur Herstellung von Oligosilanen wünschenswert, die einfacher und kostengünstiger in der Durchführung sind und Oligosilane hoher Reinheit ergeben.

US 4,632,816 beschreibt unter anderem die Reduktion von Siliciumtetrafluorid (SiF₄) mit komplexen Metallhydriden, wie zum Beispiel NaAlH₄, in Dimethoxyethan oder anderen Lösungsmitteln bei etwa 50°C.

DE 35 06 071 Al befasst sich mit der Herstellung von Disilan (Si₂H₆). Hierfür wird Hexachlordisilan (Si₂Cl₆) mit einem Gemisch aus LiH und LiAlH₄ in Di-n-butylether bei -25°C bis 50°C umgesetzt.

WO 2007/073196 Al beschreibt unter anderem die Reduktion von SiCl₄ zu SiH₄ mit MgH₂ als Reduktionsmittel in THF. Geringe Ausbeuten wurden bei Raumtemperatur beobachtet, gute Ausbeuten wurden bei Reaktionstemperaturen von mindestens 120°C und Reaktionszeiten von ≤ 60 min erhalten.

In der DE 43 13 130 C1 werden Organochlorsilane, zum Beispiel Dimethyldichlorsilan (Me₂SiCl₂), mit MgH₂ reduziert. Hierfür wird die Reaktionsmischung beispielsweise in THF oder 1,2-Dimethoxyethan am Rückfluss erhitzt.

In der DE 42 39 246 C1 wird unter anderem ein α,ω-Dichlorpoly(dimethylsiloxan) mit Chlor-Magnesium-Aluminiumhydridochlorid als Reduktionsmittel in THF reduziert.

Eine zu lösende Aufgabe einer Ausführungsform der Erfindung besteht daher darin, ein verbessertes und kostengünstigeres Verfahren zur Herstellung von Oligosilanen anzugeben.

Die vorstehende Aufgabe wird durch ein Verfahren nach Anspruch 1 gelöst. Bevorzugte Ausführungsformen werden in den Unteransprüchen dargestellt.

Es wird ein Verfahren zur Herstellung von Oligosilanen angegeben. Oligosilane werden nach diesem Verfahren durch Umsetzung von halogenierten Oligosilanen mit einem Metallhydrid hergestellt, wobei
- ein Katalysator und ein Alkalimetallhalogenid zugegeben werden und die Umsetzung in Gegenwart des Katalysators und des Alkalimetallhalogenids erfolgt,
   wobei der Katalysator ein Halogenid eines mehrwertigen Metalls umfasst;
- die Umsetzung in einem etherischen Lösungsmittel erfolgt und
- als Metallhydrid eingesetzt wird: Lithiumhydrid (LiH), Natriumhydrid (NaH), Kaliumhydrid (KH), Magnesiumhydrid (MgH₂), Calciumhydrid (CaH₂) oder eine Kombination davon.

"Halogenierte Oligosilane" sind im Sinne der Erfindung überwiegend oder vollständig mit Halogenatomen substituiert. "Oligosilane" sind im Sinne der Erfindung überwiegend oder vollständig mit H-Atomen substituiert. Die halogenierten Oligosilane werden nach dem anmeldungsgemäßen Verfahren zu Oligosilanen reduziert. Die Oligosilane und halogenierten Oligosilane können jeweils Gemische von Verbindungen oder einzelne Verbindungen sein. Oligosilane und halogenierte Oligosilane im Sinne der Erfindung sind Verbindungen, die entweder ein einzelnes zentrales Si-Atom aufweisen oder, wenn sie mehrere Si-Atome aufweisen, diese durch Si-Si-Bindungen miteinander verbunden sind. Insbesondere weisen Oligosilane und halogenierte Oligosilane im Sinne der Erfindung 1 bis 8 Siliciumatome auf.

Ein mehrwertiges Metall hat eine Oxidationszahl > 1. Alkalimetalle sind keine mehrwertigen Metalle, sie haben in Halogeniden die Oxidationszahl = 1. Alkalimetallhalogenide werden in dieser Anmeldung nicht zu den Katalysatoren gezählt. Eine Reaktionsmischung kann eine Lösung und insbesondere eine Suspension sein und kann durch Schütteln oder Rühren durchmischt werden.

Das Alkalimetallhalogenid dient unter anderem dazu, die Löslichkeit des Metallhydrids und anderer reaktiver Spezies zu verbessern, sodass diese in ihrer Reaktivität gesteigert sind, oder dazu, den Katalysator in eine reaktivere Form zu überführen. In Gegenwart des Alkalimetallhalogenids wird somit die Umsetzung von halogenierten Oligosilanen zu Oligosilanen im Vergleich zu einem herkömmlichen Verfahren in Abwesenheit eines solchen Alkalimetallhalogenids beschleunigt. Hierdurch ist es möglich, geringere Mengen an Katalysator, der als Lewis-Säure wirken kann, einzusetzen. Die Reaktionsgeschwindigkeit wird jedoch durch die geringe Konzentration an Katalysator nicht nachteilig beeinträchtigt und kann sogar im gesteigert werden. Es kann also im anmeldungsgemäßen Verfahren der Zusatz des Katalysators durch das kostengünstigere Alkalimetallhalogenid reduziert werden, wodurch die Produktionskosten gesenkt werden. Alkalimetallhalogenide sind aus ökologischer Sicht unbedenklich, sodass das Verfahren nicht nur wirtschaftlicher als herkömmliche Verfahren ist, sondern auch weniger die Umwelt belastet.

Durch eine Kombination von Katalysator und Alkalimetallhalogenid ist es möglich, die Umsetzung von halogenierten Oligosilanen zu Oligosilanen bei niedrigen Reaktionstemperaturen durchzuführen. Hierdurch können unerwünschte Zersetzungen, wie beispielsweise die Abspaltung von Monosilanen, reduziert oder nahezu vollständig unterbunden werden. Nahezu vollständig soll im Rahmen der Anmeldung mindestens zu 95%, insbesondere mindestens 99%, bedeuten. Da weniger Zersetzungen auftreten, erhöht sich insgesamt die Ausbeute des Verfahrens, wodurch es wirtschaftlicher wird. Vorteilhafterweise fallen dabei auch die gewünschten Oligosilane in großer Reinheit an, da diese weniger durch Zersetzungsprodukte verunreinigt sind, als es bei herkömmlichen Verfahren der Fall ist.

Die Oligosilane sind in der Regel flüchtig und können vorteilhafterweise über die Gasphase aus der Reaktionsmischung entfernt werden und somit leicht isoliert werden.

Gemäß einer weiteren Ausführungsform des Verfahrens wird der Katalysator in Bezug auf das Metallhydrid in überstöchiometrischer Menge eingesetzt. Das heißt, dass mehr als ein Äquivalent Katalysator pro Äquivalent Metallhydrid eingesetzt werden kann.

Gemäß einer weiteren Ausführungsform des Verfahrens wird der Katalysator in Bezug auf das Metallhydrid in einer stöchiometrischen oder einer unterstöchiometrischen Menge eingesetzt. Der Katalysator kann bevorzugt in Bezug auf das Metallhydrid in einer unterstöchiometrischen Menge eingesetzt werden. Unter einer "unterstöchiometrischen" beziehungsweise substöchiometrischen Menge ist im Rahmen dieser Anmeldung eine Menge von weniger als ein Äquivalent zu verstehen. Das heißt, es kann in dem Verfahren weniger als ein Äquivalent Katalysator pro Äquivalent Metallhydrid eingesetzt werden.

Gemäß einer weiteren Ausführungsform des Verfahrens wird das Metallhydrid in einem Verhältnis der Molmengen zum Katalysator von 1 : 1 bis 200 : 1 eingesetzt. Es kann das Metallhydrid in einem Verhältnis der Molmengen zum Katalysator von 4 : 1 bis 150 : 1, bevorzugt von 20 : 1 bis 100 : 1 eingesetzt werden. Insbesondere durch die Kombination des Katalysators mit dem Alkalimetallhalogenid ist es möglich, besonders geringe Mengen an Katalysator in dem Verfahren einzusetzen.

Gemäß einer weiteren Ausführungsform des Verfahrens wird das Alkalimetallhalogenid in Bezug auf das Metallhydrid in einer unterstöchiometrischen Menge eingesetzt.

Gemäß einer weiteren Ausführungsform des Verfahrens wird der Katalysator in einem Verhältnis zum Alkalimetallhalogenid von 1 :4 bis 10 : 1, bevorzugt von 1 : 3 bis 2 : 1, eingesetzt. Ausführungsformen des Verfahrens, in denen nur geringe Mengen an Alkalimetallhalogenid benötigt werden, sind besonders vorteilhaft. Da sowohl Katalysator als auch Alkalimetallhalogenid in unterstöchiometrischen Mengen eingesetzt werden können, wird auch der apparative Aufwand für das Verfahren reduziert. Zum Beispiel kann in den Fällen, in denen der Katalysator und/oder das Alkalimetallhalogenid nicht oder nur wenig in Lösung vorliegen, die Reaktionsmischung leichter durchmischt werden. Hierdurch wird wiederum die Umsetzung erleichtert.

Gemäß einer weiteren Ausführungsform des Verfahrens wird das Metallhydrid in einem Verhältnis der Molmengen zu dem im halogenierten Oligosilan enthaltenen Halogenid von 1 : 1,1 bis 5 : 1, insbesondere von 1 : 1 bis 1,5 : 1 eingesetzt. Vorteilhafterweise werden also in dem anmeldungsgemäßen Verfahren auch in Gegenwart der geringen Mengen an Katalysator nur stöchiometrische oder leicht überstöchiometrische Mengen an Metallhydrid pro im Silan enthaltenen Halogenid benötigt. Die Molmenge an im halogenierten Oligosilan enthaltenem Halogenid ist dabei größer als die Molmenge des halogenierten Oligosilans. Beispielsweise entspricht die in dem halogenierten Oligosilan Si₂Cl₆ enthaltene Molmenge an Chlorid dem sechsfachen der eingesetzten Si₂Cl₆-Molmenge.

Erfindungsgemäß wird ein Metallhydrid eingesetzt, das ein Alkalimetallhydrid, ein Erdalkalimetallhydrid oder eine Kombinationen davon umfasst. Als Alkalimetallhydrid wird Lithiumhydrid (LiH), Natriumhydrid (NaH), Kaliumhydrid (KH) und eine Kombination davon eingesetzt. Als Erdalkalimetallhydrid wird Magnesiumhydrid (MgH₂), Calciumhydrid (CaH₂) und eine Kombination davon eingesetzt.

Allgemein sind Alkalimetall- oder Erdalkalimetallhydride kostengünstiger als die aus ihnen gewonnenen komplexen Hydride, beispielsweise Metall-Borhydride oder Metall-Aluminiumhydride. Daher ist das anmeldungsgemäße Verfahren wirtschaftlicher als herkömmliche Verfahren mit komplexen Metallhydriden, da die Alkali- und/oder Erdalkalihydride durch Zugabe unterstöchiometrischer Mengen von Katalysatorverbindungen beziehungsweise Alkalimetallhalogenid aktiviert werden. Katalysatorverbindungen sind dabei insbesondere die unten aufgeführten Katalysatoren. Beispiele für komplexe Hydride sind Natriumborhydrid, Lithiumaluminiumhydrid und Red-Al^{®}.

Vorteilhafterweise sind Alkalimetallhydride und Erdalkalimetallhydride nicht nur günstiger als komplexe Hydride, sondern auch leichter zu handhaben. Einige Alkalimetallhydride sind als Dispersion in organischen Lösungsmitteln günstig kommerziell erhältlich und können auch in Form dieser Dispersion in dem anmeldungsgemäßen Verfahren eingesetzt werden. In solchen Dispersionen ist das Metallhydrid vor Feuchtigkeit und Luftsauerstoff gut geschützt. Dadurch wird insbesondere ein verfahrenstechnischer Vorteil gegenüber herkömmlichen Verfahren mit komplexen Metallhydriden, die sehr empfindlich gegenüber Feuchtigkeit und/oder Luftsauerstoff reagieren, erhalten. Das Verfahren wird dadurch auch sicherer, da die Gefahr von Störfällen durch spontane, unkontrollierte Nebenreaktionen verringert wird. Ein weiterer Vorteil von Alkalimetallhydriden und Erdalkalimetallhydriden ist, dass anders als bei Borhydriden oder Metall-Borhydriden keine flüchtigen, toxischen Verbindungen wie Diboran freigesetzt werden können.

Gemäß einer weiteren Ausführungsform des Verfahrens wird ein Metallhydrid eingesetzt, das ein Alkalimetallhydrid umfasst. Insbesondere kann Alkalimetallhydrid Lithiumhydrid umfassen oder daraus bestehen. Vorteilhafterweise ist Lithiumhydrid sehr günstig und weist eine geringe Molmasse auf. Des Weiteren ist im Lithiumhydrid der Masseanteil an Hydrid sehr viel größer als in anderen Metallhydriden. Somit kann die Masse an angesetztem Metallhydrid im Vergleich zu anderen Metallhydriden reduziert werden und dadurch Produktionskosten und Abfall vermindert werden. Lithiumhydrid ist vorteilhafterweise auch als reiner Feststoff gut zu handhaben.

Gemäß einer weiteren Ausführungsform des Verfahrens erfolgt die Umsetzung in einem etherischen Lösungsmittel, das ein erstes Lösungsmittel mit einer Ether-Gruppe und optional ein zweites Lösungsmittel umfasst oder daraus besteht. Nicht einschränkende Beispiele für erste Lösungsmittel, die mindestens einer Ether-Gruppe enthalten, sind Diethylether, Tetrahydrofuran, Dipropylether, Butylmethylether, Dibutylether, Diphenylether, Dioxan, Dimethoxyethan oder Diethylenglycoldimethylether. Das etherische Lösungsmittel kann auch eine Kombination von ersten Lösungsmitteln umfassen oder daraus bestehen. Somit kann das etherische Lösungsmittel mindestens ein erstes Lösungsmittel mit einer Ether-Gruppe, auch Ether-Funktion genannt, enthalten oder daraus bestehen. Ein erstes Lösungsmittel mit einer Ether-Funktion ist wichtig für eine effektive Umsetzung, da es die Löslichkeit verbessert und/oder für die Stabilisierung einiger Spezies in der Reaktionsmischung wichtig ist.

Nicht einschränkende Beispiele für das optional im etherischen Lösungsmittel vorhandene zweite Lösungsmittel, das keine Ether-Gruppe enthält, sind aromatische Verbindungen wie Toluol, Xylol, Ethylbenzol oder Alkane wie Octan, Decan oder Paraffinöl sowie deren Mischungen.

In den genannten ersten und zweiten Lösungsmitteln stehen die Alkylsubstituenten auch für verzeigte Alkylsubstituenten. Propyl steht also jeweils stellvertretend für n-Propyl und iso-Propyl, wodurch beispielsweise Dipropylether stellvertretend für Di-n-propylether, n-Propyl-iso-propylether und Di-iso-propylether steht. Analog steht Butyl jeweils stellvertretend für n-Butyl, sec-Butyl, tert-Butyl und iso-Butyl. Des Weiteren stehen die Lösungsmittel auch stellvertretend für die gesamte Lösungsmittelfamilie, also Xylol für orto-, meta- und para-Xylol, Octan für n-Octan oder ein verzweigtes Octan, Decan für n-Decan oder ein verzweigtes Decan, etc.

Es werden insbesondere Lösungsmittel in dem Verfahren eingesetzt, die einen höheren Siedepunkt und damit einen niedrigeren Dampfdruck als das gewünschte Produkt aufweisen. Dadurch verdampft das Lösungsmittel nicht so leicht wie das gewünschte Reaktionsprodukt, so dass bevorzugt das Reaktionsprodukt, das Oligosilan, über die Gasphase aus der Reaktionsmischung entfernt werden kann. Das Oligosilan ist somit leicht zu isolieren. Ein mögliches Reaktionsprodukt ist beispielsweise das Oligosilan Si₃H₈, das unter Normalbedingungen einen Siedepunkt von etwa 60°C aufweist. Es wird daher bevorzugt für die Herstellung von Si₃H₈ aus Si₃Cl₈ ein Lösungsmittel mit einem Siedepunkt von > 60°C ausgewählt.

Gemäß einer weiteren Ausführungsform des Verfahrens wird als Katalysator ein Halogenid eines mehrwertigen Metalls eingesetzt, das ausgewählt ist aus einer Gruppe, bestehend aus: Aluminiumfluorid, Aluminiumchlorid, Aluminiumbromid, Aluminiumiodid, Galliumfluorid, Galliumchlorid, Galliumbromid, Galliumiodid und eine Kombination davon. Es wird insbesondere ein Katalysator eingesetzt, der Aluminiumchlorid, Aluminiumbromid und eine Kombinationen davon umfasst oder daraus besteht. Diese anorganischen Katalysatoren sind im Allgemeinen wirtschaftlicher als Bor-, Aluminium- oder Galliumverbindungen, die organische Substituenten umfassen, wobei diese organischen Substituenten beispielsweise Alkyl-, Aryl- oder Alkoxy-Substituenten sein können. Die im Verfahren eingesetzten anorganischen Katalysatoren sind nicht nur günstiger als diese organisch substituierten Verbindungen, sondern auch in ihrer Handhabung einfacher, da sie nicht pyrophor beziehungsweise nicht so empfindlich gegenüber Feuchtigkeit und/oder Luftsauerstoff sind. Dadurch werden ebenfalls die oben beschriebenen Vorteile für das anmeldungsgemäße Verfahren erzielt.

Gemäß einer weiteren Ausführungsform des Verfahrens wird als Katalysator Aluminiumchlorid eingesetzt. Anmeldungsgemäß wurde erkannt, dass Aluminiumchlorid in Verbindung mit einem Alkalimetallhalogenid ohne weitere Katalysatoren, die in der Regel teurer als Aluminiumchlorid sind eingesetzt werden kann. Dadurch ist das anmeldungsgemäße Verfahren wirtschaftlicher als herkömmliche Verfahren. Beispielsweise ist eine Verwendung von reinem Aluminiumchlorid kostengünstiger als der Einsatz von Aluminiumbromid, da letzteres wesentlich teurer ist. Somit ist es also möglich das anmeldungsgemäße Verfahren insbesondere kostengünstiger als andere, beispielsweise herkömmliche Verfahren durchzuführen.

Gemäß einer weiteren Ausführungsform des Verfahrens wird ein Alkalimetallhalogenid eingesetzt, das ausgewählt ist aus einer Gruppe, bestehend aus: Lithiumchlorid, Lithiumbromid, Lithiumiodid, Natriumchlorid, Natriumbromid, Natriumiodid und Kombinationen davon. Es kann insbesondere ein Alkalimetallhalogenid eingesetzt werden, das aus Lithiumchlorid, Lithiumbromid und Kombinationen davon ausgewählt ist. Es kann insbesondere Lithiumbromid als Alkalimetallhalogenid eingesetzt werden, da dieses in etherischen Lösungsmitteln besser löslich und dadurch reaktiver als Lithiumchlorid ist. Besonders vorteilhaft ist dabei eine Kombination von unterstöchiometrischen Mengen an Lithiumbromid mit unterstöchiometrischen Mengen an Aluminiumchlorid als Katalysator für das Verfahren.

Gemäß einer weiteren Ausführungsform des Verfahrens werden halogenierte Oligosilane eingesetzt, die eine Zusammensetzung aufweisen, die durch die Formel SiₙHₚXₘ₋ₚ repräsentiert wird. Dabei ist n = 1 bis 8, m = 2n bis 2n+2, 0 ≤ p < 0,5*m und X = F, Cl, Br, I oder eine Kombination davon. Es kann dabei insbesondere X = F, Cl oder eine Kombination davon sein. Dabei kann n = 1 bis 5 und insbesondere auch n = 2 bis 5 sein. Es kann bevorzugt 0 ≤ p < 0,1*m und insbesondere bevorzugt 0 ≤ p < 0,01*m sein. Es können in dem Verfahren sowohl lineare, verzweigte als auch cyclische halogenierte Oligosilane eingesetzt werden, um die entsprechenden linearen, verzweigten als auch cyclischen Oligosilane herzustellen.

Gemäß einer weiteren Ausführungsform des Verfahrens werden als halogenierte Oligosilane Oligochlorsilane eingesetzt, die eine Zusammensetzung aufweisen, die durch die Formel SiₙClₘ repräsentiert wird. Dabei ist m = 2n bis 2n+2. Insbesondere ist m = 2n+2, so dass die Oligochlorsilane durch die Formel SiₙCl₂ₙ₊₂ repräsentiert werden. Dabei kann n = 1 bis 8, bevorzugt n = 1 bis 5 und insbesondere bevorzugt n = 1 bis 3 sein.

Gemäß einer weiteren Ausführungsform des Verfahrens werden Oligosilane aus den halogenierten Oligosilanen hergestellt, die eine Zusammensetzung aufweisen, die durch die Formel SiₙH_{q}X_{m-q} repräsentiert wird, wobei 0,95*m ≤ q ≤ m und insbesondere 0,99*m ≤ q ≤ m ist. Es können n und m so gewählt werden, wie es oben beschrieben ist.

Gemäß einer weiteren Ausführungsform des Verfahrens erfolgt die Umsetzung bei einem Druck von 10 hPa bis 1500 hPa. Die Umsetzung kann insbesondere bei einem Druck von 10 hPa bis 500 hPa erfolgen. Insbesondere kann die Umsetzung bei einem Unterdruck, das heißt kleiner als 1000 hPa, erfolgen, wodurch das Reaktionsprodukt, das Oligosilan, leicht aus dem Reaktionsgemisch entfernt und somit leicht isoliert wird. Ferner erlaubt es die Umsetzung bei einem Unterdruck, dass das Reaktionsprodukt auch bei niedrigen Temperaturen über die Gasphase aus dem Reaktionsgemisch entfernt werden kann.

Gemäß einer weiteren Ausführungsform des Verfahrens erfolgt die Umsetzung bei einer Temperatur zwischen -20°C und dem Siedepunkt des Lösungsmittels. Die Umsetzung kann auch zwischen -10°C und 70°C, insbesondere zwischen 0°C und 40°C, erfolgen.

Gemäß einer weiteren Ausführungsform des Verfahrens umfasst das Verfahren die folgenden Verfahrensschritte:
(a) Zugeben von Metallhydrid und Lösungsmittel;
(b) Zugeben von Katalysator und Alkalimetallhalogenid;
(c) Zugeben von halogeniertem Oligosilan.
Das Lösungsmittel kann eine Etherfunktion aufweisen, also ein etherisches Lösungsmittel wie oben beschrieben sein, oder es kann ein weiters Lösungsmittel mit einer Etherfunktion in einem anderen Verfahrensschritt zugegeben werden, so dass insgesamt ein etherisches Lösungsmittel im Verfahren verwendet wird. Die Reihenfolge der genannten Reaktionsschritte kann beliebig sein, es wird jedoch insbesondere in dieser Reihenfolge vorgegangen. Einzelne Reaktionsschritte können dabei zeitgleich erfolgen beziehungsweise zusammen durchgeführt werden. Die einzelnen Bestandteile in der Reaktionsmischung können gemäß den beschriebenen Ausführungsformen gewählt sein.

Das Metallhydrid kann im Verfahrensschritt (a) entweder pur, als Suspension in einem etherischen Lösungsmittel oder als Dispersion in einem organischen Lösungsmittel zugegeben werden. In dem Verfahrensschritt (b) können der Katalysator und das Alkalimetallhalogenid als Feststoffe oder in gelöster Form zugegeben werden. Die beiden Verbindungen können dabei getrennt voneinander oder als Gemisch eingesetzt werden. Werden die beiden Verbindungen getrennt voneinander zugegeben, so ist die Reihenfolge der Zugabe beliebig.

Gemäß einer Weiterbildung dieser Ausführungsform erfolgt die Reaktion unter Durchmischen von flüssiger und fester Phase, beispielsweise durch Schütteln oder Rühren, insbesondere durch Rühren. Dabei kann in einem oder in mehreren Verfahrensschritten durchmischt werden.

Gemäß einer Weiterbildung dieser Ausführungsform erfolgt die Zugabe des halogenierten Oligosilans im Verfahrensschritt (c) durch zudosieren. Das heißt, das Oligosilan wird insbesondere kontrolliert zugegeben.

Gemäß einer Weiterbildung dieser Ausführungsform wird das gebildete Oligosilan in einem weiteren Verfahrensschritt (d) gasförmig aus dem Reaktionsgemisch entfernt. Es kann separat isoliert und angereichert werden. Der Verfahrensschritt (d) kann zeitgleich oder teilweise zeitgleich zu einem oder mehreren anderen Verfahrensschritten erfolgen, insbesondere zeitgleich oder teilweise zeitgleich zum Verfahrensschritt (c).

Nachfolgend ist eine weitere Variante des Verfahrens zur Herstellung von Oligosilanen durch Umsetzung von halogenierten Oligosilanen mit einem Metallhydrid beschrieben, in der mehrere Ausführungsformen des anmeldungsgemäßen Verfahrens kombiniert sind. Diese Variante kann insbesondere durch die weiteren ausgeführten Beispiele und Ausführungsformen beliebig ergänzt werden.

Zur Herstellung von Oligosilanen SiₙH₂ₙ₊₂ (n = 1 - 3) aus jeweils Tetrachlorsilan SiCl₄, Hexachlordisilan Si₂Cl₆ oder Octachlortrisilan Si₃Cl₈ wird in einem Lösungsmittel, welches mindestens eine Ether-Gruppe enthält oder Mischungen von Lösungsmitteln, welche jeweils mindestens eine Ether-Gruppe enthalten oder Mischungen von mindestens einem Lösungsmittel, welches mindestens eine Ether-Gruppe enthält, mit weiteren Lösungsmitteln, die keine Ether-Gruppen enthalten, Alkalimetallhydrid vorgelegt und AlCl₃ und Lithiumbromid LiBr zugegeben. Zu dieser Mischung wird das Oligochlorsilan SiₙCl₂ₙ₊₂ (n = 1 - 3) zudosiert und das jeweilige Reaktionsprodukt SiH₄, Si₂H₆ oder Si₃H₈ gasförmig aus dem Reaktionsraum entfernt.

Nicht einschränkende Beispiele für Lösungsmittel, die mindestens einer Ether-Gruppe enthalten, sind Diethylether, Tetrahydrofuran, Dipropylether, Butylmethylether, Dibutylether, Diphenylether, Dioxan, Dimethoxyethan oder Diethylenglycoldimethylether. Nicht einschränkende Beispiele für Lösungsmittel, die keine Ether-Gruppe enthalten, sind aromatische Verbindungen wie Toluol, Xylol, Ethylbenzol oder Alkane wie Octan, Decan oder Paraffinöl sowie deren Mischungen. Bevorzugt werden Lösungsmittel verwendet, die einen höheren Siedepunkt als das jeweilige Produkt besitzen. Entsprechend werden zur Herstellung von Si₃H₈ Lösungsmittel oder Lösungsmittelgemische mit einem Normaldruck-Siedepunkt > 60°C eingesetzt.

Beispiele für Alkalimetallhydrid sind LiH, Natriumhydrid (NaH), Kaliumhydrid (KH) oder deren Mischungen. Bevorzugt wird LiH eingesetzt.

AlCl₃ und LiBr können als Feststoffe oder in gelöster Form zugegeben werden. Die beiden Verbindungen können dabei getrennt voneinander oder als Gemisch eingesetzt werden. Werden die beiden Verbindungen getrennt voneinander zugegeben, so ist die Reihenfolge der Zugabe beliebig.

Die Reaktion wird bevorzugt unter Durchmischen von flüssiger und fester Phase durchgeführt, beispielsweise durch Rühren.

Die Herstellung der Silane erfolgt bei Temperaturen zwischen -20°C und dem Siedepunkt des eingesetzten Lösungsmittels oder der eingesetzten Lösungsmittelmischung. Bevorzugt liegt die Reaktionstemperatur zwischen -10°C und 70°C, besonders bevorzugt zwischen 0°C und 40°C.

Das Verfahren wird bei einem Druck zwischen 10 hPa und 150 kPa durchgeführt. Dabei ist die Herstellung von Si₃H₈ bei vermindertem Druck von 10 hPa bis 50 kPa bevorzugt.

Das Verhältnis der Molmengen von eingesetztem AlCl₃ zu eingesetztem LiBr liegt zwischen 1 : 4 und 10 : 1, bevorzugt zwischen 1 : 3 und 2 : 1.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Verfahren zur Herstellung von Oligosilanen durch Umsetzung von halogenierten Oligosilanen mit einem Metallhydrid, wobei
- ein Katalysator und ein Alkalimetallhalogenid zugegeben werden und die Umsetzung in Gegenwart des Katalysators und des Alkalimetallhalogenids erfolgt,
wobei der Katalysator ein Halogenid eines mehrwertigen Metalls umfasst;
- die Umsetzung in einem etherischen Lösungsmittel erfolgt; und
- als Metallhydrid eingesetzt wird: Lithiumhydrid (LiH), Natriumhydrid (NaH), Kaliumhydrid (KH), Magnesiumhydrid (MgH₂), Calciumhydrid (CaH₂) oder eine Kombination davon.

2. Verfahren nach dem vorherigen Anspruch,
wobei der Katalysator in Bezug auf das Metallhydrid in einer stöchiometrischen oder einer unterstöchiometrischen Menge eingesetzt wird.

3. Verfahren nach einem der vorherigen Ansprüche,
wobei das Metallhydrid in einem Verhältnis der Molmengen zum Katalysator von 1 : 1 bis 200 : 1, bevorzugt von 4 : 1 bis 150 : 1, besonders bevorzugt zwischen 20 : 1 und 100 : 1, eingesetzt wird.

4. Verfahren nach einem der vorherigen Ansprüche,
wobei das Alkalimetallhalogenid in Bezug auf das Metallhydrid in einer unterstöchiometrischen Menge eingesetzt wird.

5. Verfahren nach einem der vorherigen Ansprüche,
wobei der Katalysator in einem Verhältnis zum Alkalimetallhalogenid von 1 : 4 bis 10 : 1, bevorzugt von 1 : 3 bis 2 : 1, eingesetzt wird.

6. Verfahren nach einem der vorherigen Ansprüche,
wobei das Metallhydrid in einem Verhältnis der Molmengen zu dem im halogenierten Silan enthaltenen Halogenid von 1 : 1,1 bis 5 : 1, bevorzugt von 1 : 1 bis 1,5 : 1, eingesetzt wird.

7. Verfahren nach einem der vorherigen Ansprüche,
wobei ein Metallhydrid eingesetzt wird, das ein Alkalimetallhydrid, bevorzugt Lithiumhydrid, umfasst.

8. Verfahren nach einem der vorherigen Ansprüche,
- wobei die Umsetzung in einem etherischen Lösungsmittel erfolgt, das ein erstes Lösungsmittel mit einer Ether-Gruppe und optional ein zweites Lösungsmittel umfasst,
- wobei das erste Lösungsmittel ausgewählt ist aus einer Gruppe, umfassend: Diethylether, Tetrahydrofuran, Dipropylether, Butylmethylether, Dibutylether, Diphenylether, Dioxan, Dimethoxyethan, Diethylenglycoldimethylether und eine Kombination davon, und das zweite Lösungsmittel ausgewählt ist aus einer Gruppe, umfassend: Toluol, Xylol, Ethylbenzol, Octan, Decan, Paraffinöl und eine Kombination davon.

9. Verfahren nach einem der vorherigen Ansprüche,
wobei als Katalysator ein Halogenid eines mehrwertigen Metalls eingesetzt wird, das ausgewählt ist aus einer Gruppe, bestehend aus: Aluminiumfluorid, Aluminiumchlorid, Aluminiumbromid, Aluminiumiodid, Galliumfluorid, Galliumchlorid, Galliumbromid, Galliumiodid und eine Kombination davon, bevorzugt Aluminiumchlorid, Aluminiumbromid und eine Kombination davon.

10. Verfahren nach einem der vorherigen Ansprüche,
wobei als Katalysator Aluminiumchlorid eingesetzt wird.

11. Verfahren nach einem der vorherigen Ansprüche,
wobei ein Alkalimetallhalogenid eingesetzt wird, das ausgewählt ist aus einer Gruppe, bestehend aus:
Lithiumchlorid, Lithiumbromid, Lithiumiodid, Natriumchlorid, Natriumbromid, Natriumiodid und eine Kombination davon, bevorzugt Lithiumchlorid, Lithiumbromid und eine Kombination davon, besonders bevorzugt Lithiumbromid.

12. Verfahren nach einem der vorherigen Ansprüche,
wobei halogenierte Oligosilane eingesetzt werden, die eine Zusammensetzung aufweisen, die durch die Formel SiₙHₚXₘ₋ₚ repräsentiert wird, und
wobei n = 1 bis 8, m = 2n bis 2n+2, 0 ≤ p < 0,5*m und X = F, Cl, Br, I oder eine Kombination davon ist.

13. Verfahren nach einem der vorherigen Ansprüche,
wobei die Umsetzung bei einem Druck von 10 hPa bis 1500 hPa, bevorzugt von 10 hPa bis 500 hPa, erfolgt.

14. Verfahren nach einem der vorherigen Ansprüche,
wobei die Umsetzung bei einer Temperatur zwischen -20°C und dem Siedepunkt des Lösungsmittels, bevorzugt zwischen -10°C und 70°C, besonders bevorzugt zwischen 0°C und 40°C, erfolgt.

## Claims

1. Method for producing oligosilanes by reacting halogenated oligosilanes with a metal hydride,
wherein
- a catalyst and an alkali metal halide are added and the reaction takes place in the presence of the catalyst and of the alkali metal halide, wherein the catalyst comprises a halide of a multivalent metal;
- the reaction takes place in an ethereal solvent; and
- the metal hydride used is: lithium hydride (LiH), sodium hydride (NaH), potassium hydride (KH), magnesium hydride (MgH₂), calcium hydride (CaH₂) or a combination thereof.

2. Method according to the preceding claim, wherein the catalyst is used in a stoichiometric or a substoichiometric amount relative to the metal hydride.

3. Method according to either preceding claim, wherein the metal hydride is used in a ratio of moles to catalyst ranging from 1:1 to 200:1, preferably from 4:1 to 150:1 and more preferably at between 20:1 and 100:1.

4. Method according to any preceding claim, wherein the alkali metal halide is used in a substoichiometric amount relative to the metal hydride.

5. Method according to any preceding claim, wherein the catalyst is used in a ratio to alkali metal halide ranging from 1:4 to 10:1 and preferably from 1:3 to 2:1.

6. Method according to any preceding claim, wherein the metal hydride is used in a ratio of moles to halide in halogenated silane ranging from 1:1.1 to 5:1 and preferably from 1:1 to 1.5:1.

7. Method according to any preceding claim, wherein a metal hydride used comprises an alkali metal hydride, preferably lithium hydride.

8. Method according to any preceding claim,
- wherein the reaction takes place in an ethereal solvent comprising a first solvent having an ether group and optionally a second solvent,
- wherein the first solvent is selected from a group comprising: diethyl ether, tetrahydrofuran, dipropyl ether, butyl methyl ether, dibutyl ether, diphenyl ether, dioxane, dimethoxyethane, diethylene glycol dimethyl ether and a combination thereof, and
the second solvent is selected from a group comprising: toluene, xylene, ethylbenzene, octane, decane, paraffin oil and a combination thereof.

9. Method according to any preceding claim, wherein the catalyst used is a halide of a multivalent metal selected from a group consisting of:
aluminum fluoride, aluminum chloride, aluminum bromide, aluminum iodide, gallium fluoride, gallium chloride, gallium bromide, gallium iodide and a combination thereof, preferably aluminum chloride, aluminum bromide and a combination thereof.

10. Method according to any preceding claim, wherein the catalyst used is aluminum chloride.

11. Method according to any preceding claim, wherein an alkali metal halide used is selected from a group consisting of: lithium chloride, lithium bromide, lithium iodide, sodium chloride, sodium bromide, sodium iodide and a combination thereof, preferably lithium chloride, lithium bromide and a combination thereof, more preferably lithium bromide.

12. Method according to any preceding claim, wherein halogenated oligosilanes used have a composition represented by the formula SiₙHₚXₘ₋ₚ, where n = 1 to 8, m = 2n to 2n+2, 0 ≤ p < 0.5*m and X = F, Cl, Br, I or a combination thereof.

13. Method according to any preceding claim, wherein the reaction takes place at a pressure of 10 hPa to 1500 hPa and preferably of 10 hPa to 500 hPa.

14. Method according to any preceding claim, wherein the reaction takes place at a temperature between -20°C and the boiling point of the solvent, preferably between -10°C and 70°C and more preferably between 0°C and 40°C.

## Revendications

1. Procédé pour la préparation d'oligosilanes par transformation d'oligosilanes halogénés avec un hydrure métallique,
- un catalyseur et un halogénure de métal alcalin étant ajoutés et la transformation ayant lieu en présence du catalyseur et de l'halogénure de métal alcalin, le catalyseur comprenant un halogénure d'un métal polyvalent ;
- la transformation ayant lieu dans un solvant éthéré ; et
- en utilisant comme hydrure de métal : l'hydrure de lithium (LiH), hydrure de sodium (NaH), l'hydrure de potassium (KH), l'hydrure de magnésium (MgH₂), l'hydrure de calcium (CaH₂) ou une combinaison de ceux-ci.

2. Procédé selon la revendication précédente, le catalyseur étant utilisé en une quantité stoechiométrique ou en une quantité inférieure à la quantité stoechiométrique par rapport à l'hydrure métallique.

3. Procédé selon l'une quelconque des revendications précédentes, l'hydrure métallique étant utilisé dans un rapport des quantités molaires par rapport au catalyseur de 1:1 à 200:1, de préférence de 4:1 à 150:1, de manière particulièrement préférée entre 20:1 et 100:1.

4. Procédé selon l'une quelconque des revendications précédentes, l'halogénure de métal alcalin étant utilisé en une quantité inférieure à la quantité stoechiométrique par rapport à l'hydrure métallique.

5. Procédé selon l'une quelconque des revendications précédentes, le catalyseur étant utilisé dans un rapport par rapport à l'halogénure de métal alcalin de 1:4 à 10:1, de préférence de 1:3 à 2:1.

6. Procédé selon l'une quelconque des revendications précédentes, l'hydrure métallique étant utilisé dans un rapport des quantités molaires par rapport à l'halogénure contenu dans le silane halogéné de 1:1,1 à 5:1, de préférence de 1:1 à 1,5:1.

7. Procédé selon l'une quelconque des revendications précédentes, un hydrure métallique étant utilisé, qui comprend un hydrure de métal alcalin, de préférence l'hydrure de lithium.

8. Procédé selon l'une quelconque des revendications précédentes,
- la transformation ayant lieu dans un solvant éthéré qui comprend un premier solvant présentant un groupe éther et éventuellement un deuxième solvant,
- le premier solvant étant choisi dans un groupe comprenant : le diéthyléther, le tétrahydrofuranne, le dipropyléther, le butylméthyléther, le dibutyléther, le diphényléther, le dioxane, le diméthoxyéthane, le diéthylèneglycoldiméthyléther et une combinaison de ceux-ci, et le deuxième solvant étant choisi dans un groupe comprenant : le toluène, le xylène, l'éthylbenzène, l'octane, le décane, l'huile de paraffine et une combinaison de ceux-ci.

9. Procédé selon l'une quelconque des revendications précédentes, un halogénure d'un métal polyvalent étant utilisé comme catalyseur, choisi dans un groupe constitué par : le fluorure d'aluminium, le chlorure d'aluminium, le bromure d'aluminium, l'iodure d'aluminium, le fluorure de gallium, le chlorure de gallium, le bromure de gallium, l'iodure de gallium et une combinaison de ceux-ci, de préférence le chlorure d'aluminium, le bromure d'aluminium et une combinaison de ceux-ci.

10. Procédé selon l'une quelconque des revendications précédentes, du chlorure d'aluminium étant utilisé comme catalyseur.

11. Procédé selon l'une quelconque des revendications précédentes, un halogénure de métal alcalin étant utilisé qui est choisi dans un groupe constitué par : le chlorure de lithium, le bromure de lithium, l'iodure de lithium, le chlorure de sodium, le bromure de sodium, l'iodure de sodium et une combinaison de ceux-ci, de préférence le chlorure de lithium, le bromure de lithium et une combinaison de ceux-ci, de manière particulièrement préférée le bromure de lithium.

12. Procédé selon l'une quelconque des revendications précédentes, des organosilanes halogénés étant utilisés, qui présentent une composition représentée par la formule SiₙHₚXₘ₋ₚ et
n = 1 à 8, m = 2n à 2n + 2, 0 ≤ p < 0,5 * m et X = F, Cl, Br, I ou une combinaison de ceux-ci.

13. Procédé selon l'une quelconque des revendications précédentes, la transformation ayant lieu à une pression de 10 hPa à 1500 hPa, de préférence de 10 hPa à 500 hPa.

14. Procédé selon l'une quelconque des revendications précédentes, la transformation ayant lieu à une température entre -20°C et le point d'ébullition du solvant, de préférence entre -10°C et 70°C, de manière particulièrement préférée entre 0°C et 40°C.
